# EUROPEAN PATENT SPECIFICATION

(11) **EP 4 138 485 B1**
(45) Date of publication and mention of the grant of the patent: **02.12.2026**
(21) Application number: 21789573.9
(22) Date of filing: 09.04.2021
(51) Int. Cl.: H04W 72/04, H04L 5/00, H04L 25/02

(54) **REFERENCE SIGNAL RESOURCE CONFIGURATION METHOD AND APPARATUS, DEVICE, AND STORAGE MEDIUM**
VERFAHREN UND VORRICHTUNG ZUR KONFIGURATION VON REFERENZSIGNALRESSOURCEN, VORRICHTUNG UND SPEICHERMEDIUM
PROCÉDÉ ET APPAREIL DE CONFIGURATION DE RESSOURCE DE SIGNAL DE RÉFÉRENCE, DISPOSITIF, ET SUPPORT DE STOCKAGE

(30) Priority: 13.04.2020 CN 202010287751
(43) Date of publication of application: 22.02.2023
(73) Proprietor: ZTE Corporation, Shenzhen, Guangdong 518057 (CN)
(72) Inventor: ZHENG, Guozeng, Shenzhen, Guangdong 518057 (CN); JIANG, Chuangxin, Shenzhen, Guangdong 518057 (CN); XIAO, Huahua, Shenzhen, Guangdong 518057 (CN); GAO, Bo, Shenzhen, Guangdong 518057 (CN); BI, Cheng, Shenzhen, Guangdong 518057 (CN)
(74) Representative: Tiburzi, Andrea
(86) International application number: PCT/CN2021/086089
(87) International publication number: WO 2021/208807

(56) References cited:
- EP-A1- 3 119 121
- EP-A2- 3 393 073
- CN-A- 109 802 792
- CN-A- 110 086 582
- CN-A- 111 901 874
- US-A1- 2019 261 336
- ZTE ET AL: "On PRB Bundling", vol. RAN WG1, no. Spokane, USA; 20170403 - 20170407, 2 April 2017 (2017-04-02), XP051242544, Retrieved from the Internet <URL:http://www.3gpp.org/ftp/Meetings_3GPP_SYNC/RAN1/Docs/> [retrieved on 20170402]
- OPPO: "Physical layer structure for NR-V2X.", 3GPP TSG RAN WG1 #98BIS, R1-1910372., 20 October 2019 (2019-10-20), XP051789177
- SEQUANS COMMUNICATIONS.: "On NR sidelink physical layer structure.", 3GPP TSG RAN WG1 MEETING #98BIS, R1-1911306., 20 October 2019 (2019-10-20), XP051790072

## Description

### TECHNICAL FIELD

The present application relates to mobile communication technology and, in particular, to a reference signal resource configuration method and apparatus, a device, and a storage medium.

### BACKGROUND

In general, the larger a signal bandwidth, the more accurate estimation of channel features of a receiver end. However, due to the effect of factors including terminal capability and interference coordination, continuous frequency domain units that can be used by a signal are limited, thereby affecting the accuracy of channel feature estimation. For example, a first path position is an important channel feature and plays an important role in signal synchronization and signal transmission time estimation. The accuracy of estimating the first path position depends largely on the bandwidth of a signal because the larger the bandwidth, the larger time resolution of sampling.

The reference document EP 3393073A2 discloses a method and apparatus from the perspective of a UE. Preferably, the method includes the UE receiving a configuration of functionality of PRB bundling from a base station. The method also includes the UE receiving an indication from the base station regarding whether the functionality of PRB bundling is applied to a TTI or not.

### SUMMARY

The invention is set out in the appended set of claims.

### BRIEF DESCRIPTION OF DRAWINGS

FIG. 1 is a flowchart of a reference signal resource configuration method according to embodiments of the present application.
FIG. 2 is a diagram illustrating a framework of frequency domain units and reference signal resource pools according to embodiments of the present application.
FIG. 3 is a diagram illustrating a framework of frequency domain units and a reference signal resource pool according to embodiments of the present application.
FIG. 4 is a diagram illustrating the structure of a reference signal resource configuration apparatus according to embodiments of the present application.
FIG. 5 is a diagram illustrating the structure of a device according to embodiments of the present application.

### DETAILED DESCRIPTION

Embodiments of the present application will be described hereinafter in detail with reference to the drawings. The estimation of a first path position plays an important role in signal synchronization and signal transmission time estimation. In the related art, two directions are provided to improve the accuracy of estimating the first path position. In one direction, the estimation accuracy is improved through an algorithm at a receiving end. In the other direction, the estimation accuracy is improved by increasing the bandwidth of a signal. In the former method, the accuracy of finding the first path position can be improved, but temporal resolution cannot be improved since temporal resolution depends on the bandwidth of the signal. Therefore, in the latter method, temporal resolution is thus improved by increasing the bandwidth of the signal. However, due to the effect of factors including terminal capability and interference coordination, continuous frequency domain units that can be used by the signal are limited, thereby affecting the accuracy of estimating the first path position. The present application aims to provide frequency domain units having an association relationship. Such frequency domain units are used for jointly estimating a channel feature, thereby improving the accuracy of estimating the channel feature.

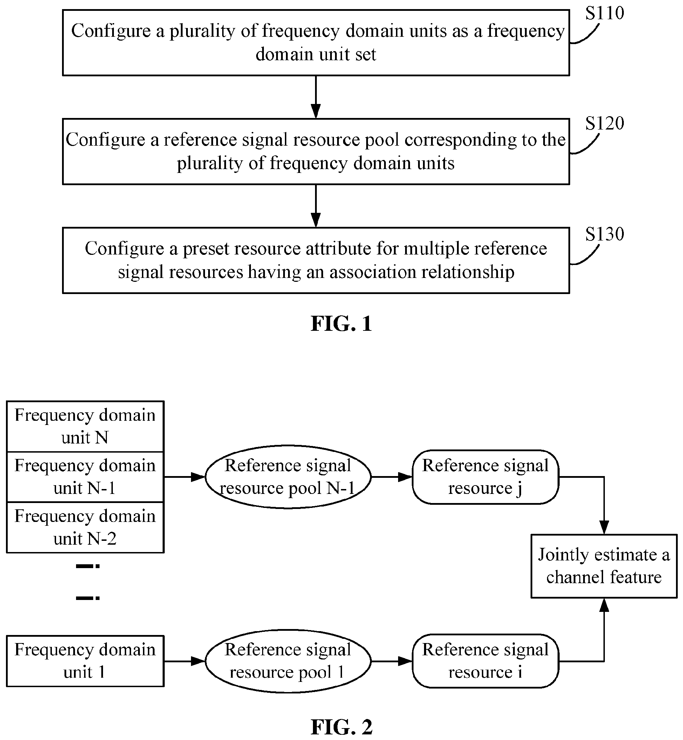

In embodiments of the present application, FIG. 1 illustrates a flowchart of a reference signal resource configuration method. The method includes the operations below.

In S110, a plurality of frequency domain units are configured as a frequency domain unit set. The frequency domain units are frequency domain resources of a preset frequency segment.

In S120, a reference signal resource pool is configured corresponding to the frequency domain units. The reference signal resource pool includes a plurality of reference signal resources. At least part of the reference signal resources have an association relationship established according to a preset rule or have an association relationship established according to an indication of an association relationship among the frequency domain units.

**In** S130, a preset resource attribute is configured for multiple reference signal resources having an association relationship.

The frequency domain units are a segment of continuous frequency domain resources. These frequency domain units in the frequency domain unit set may be continuous or discontinuous in a frequency domain. An association relationship exists among the frequency domain units. The association relationship among the frequency domain units may indicate that two frequency domain units have an association relationship when the frequency domain unit set is configured. **In** this case, reference signal resources configured for the two frequency domain units have an association relationship. The association relationship among the frequency domain units may also be such that the frequency domain units corresponding to the reference signal resources having an association relationship are made to have an association relationship only after the reference signal resources configured in the frequency domain units have an association relationship. Moreover, if it indicates that two frequency domain units have an association relationship, the two frequency domain units may be configured with the same reference signal resource pool. Multiple reference signal resources having an association relationship need to have the same or corresponding attribute about some features, facilitating the estimation of a channel feature. A preset resource attribute of the reference signal resources having the association relationship may include at least one of a preset frequency domain feature, a preset time domain feature, a preset power feature, or a preset spatial feature or may include a related attribute of frequency band resources occupied by the reference signal resources.

After the association relationship between the reference signal resources is established, the reference signal resources having the association relationship may be used for jointly estimating a channel feature. For example, the estimation of a first path position may increase the bandwidth of a signal, thereby improving temporal resolution and thus improving the accuracy of estimating the first path position.

In an implementation, the operation in which the reference signal resource pool is configured corresponding to the frequency domain units includes the operations below.

One reference signal resource pool is configured corresponding to each frequency domain unit. Reference signal resource pools are configured to include a plurality of reference signal resources. Alternatively, a plurality of reference signal resource sets are included. The reference signal resource sets include a plurality of reference signal resources. A framework of the frequency domain units and the reference signal resource pools are shown in FIG. 2.

An association relationship between multiple reference signal resources belonging to different reference signal resource pools is determined through at least one of the manners below.

The association relationship is established through serial numbers of reference signal sets where the reference signal resources are located.

The association relationship is established through serial numbers of the reference signal resources.

The association relationship is established through the configuration information for determining the power control of the reference signal resources.

The association relationship is established through the configuration information for determining spatial filters of the reference signal resources or spatial relationships of the reference signal resources.

The reference signal resources having the association relationship need to belong to different reference signal resource pools, that is, be located in different frequency domain units. If the reference signal resource pools are configured to include a plurality of reference signal resources, an association relationship is established between multiple reference signal resources that have the same serial number and are in different reference signal resource pools. If the reference signal resource pools are configured to include a plurality of reference signal resource sets and the reference signal resource sets include a plurality of reference signal resources, an association relationship is established between multiple reference signal sets that have the same serial number and are in different reference signal resource pools. If, in different reference signal resource pools, an association relationship is established between multiple reference signal resources having the same configuration information for determining the power control of the reference signal resources, the configuration information for determining the power control may be used for determining the configuration information used for determining a path loss. Alternatively, in different reference signal resource pools, an association relationship is established between reference signal resources having the same configuration information for determining spatial filters of the reference signal resources or spatial relationships of the reference signal resources.

In this implementation, the operation in which the preset resource attribute is configured for the reference signal resources having the association relationship includes the operation below.

At least one of the following is configured for the reference signal resources having the association relationship: a preset frequency domain feature, a preset time domain feature, a preset power feature, or a preset spatial feature.

That the preset frequency domain feature is configured for the reference signal resources having the association relationship includes at least one of the manners below.

The starting position in a frequency domain of each reference signal resource is configured independently.

The bandwidth size of each reference signal resource is configured independently.

The comb configuration of each reference signal resource is configured independently.

The frequency offset of each reference signal resource in one resource block (RB) is configured independently.

That the preset time domain feature is configured for the reference signal resources having the association relationship includes at least one of the manners below.

It is configured that time domain behaviors of the reference signal resources having the association relationship are consistent with each other.

It is configured that a sending interval of the reference signal resources having the association relationship in the time domain is within preset time.

Configuring that the time domain behaviors of the reference signal resources having the association relationship are consistent with each other includes at least one of the manners below.

It is configured that the reference signal resources having the association relationship are sent periodically and are sent in a same period.

It is configured that the reference signal resources having the association relationship are sent semi-persistently and are sent in a same period.

It is configured that the reference signal resources having the association relationship are sent aperiodically.

Configuring that the sending interval of the reference signal resources having the association relationship in the time domain is within the preset time includes at least one of the manners below.

It is configured that the reference signal resources having the association relationship are sent in the same slot.

It is configured that a sending interval of the reference signal resources having the association relationship in the time domain is not greater than a preset time unit.

That the preset power feature is configured for the reference signal resources having the association relationship includes at least one of the manners below.

It is configured that the reference signal resources having the association relationship are associated with a same reference signal for calculating a path loss.

It is configured that for the reference signal resources having the association relationship, each resource element (RE) has the same sending power.

It is configured that the reference signal resources having the association relationship, as for any RE, a power sum of a plurality of symbols in one slot are the same.

It is configured that the reference signal resources having the association relationship perform dynamic power adjustment simultaneously.

That the preset spatial feature is configured for the reference signal resources having the association relationship includes at least one of the manners below.

It is configured that the reference signal resources having the association relationship are sent by using the same spatial filter or the same spatial relationship.

It is configured that the reference signal resources having the association relationship semi-statically or dynamically update the spatial filters or the spatial relationships simultaneously.

The reference signal resources having the association relationship configured based on the preceding method are able to be used for jointly estimating at least one of the following channel features: channel impulse response, reference signal receiving power (RSRP), reference signal receiving quality (RSRQ), first path position, reference signal time difference (RSTD), Rx-Tx time difference, delay spread, signal receiving angle, signal receiving angle spread, Doppler, and Doppler spread.

A base station may send the reference signal resources configured in the preceding implementation to a user terminal. The user terminal uses the reference signal resources to estimate a channel feature and feeds back the channel feature to an entity of a core network. A feedback operation of the user terminal includes at least one piece of the content below.

For the reference signal resources having the association relationship, only one channel impulse response needs to be fed back.

For the reference signal resources having the association relationship, only one piece of RSRP needs to be fed back.

For the reference signal resources having the association relationship, only one RSRQ needs to be fed back.

For the reference signal resources having the association relationship, only one first path position needs to be fed back.

When the reference signal resources having the association relationship are used for calculating a reference signal time difference, reference signals of the reference signal resources having the association relationship are equivalent to one reference signal. The reference signal time difference refers to a time difference between receiving two different reference signals.

When the reference signal resources having the association relationship are used for calculating an Rx-Tx time difference, reference signals of the reference signal resources having the association relationship are equivalent to one reference signal. The Rx-Tx time difference refers to a time difference between the moment of receiving a reference signal and the moment of sending another reference signal.

For the reference signal resources having the association relationship, only one delay spread needs to be fed back.

For the reference signal resources having the association relationship, only one signal receiving angle needs to be fed back.

For the reference signal resources having the association relationship, only one signal receiving angle spread needs to be fed back.

For the reference signal resources having the association relationship, only one piece of Doppler needs to be fed back.

For the reference signal resources having the association relationship, only one Doppler spread needs to be fed back.

The base station may send the reference signal resources configured in the preceding implementation to the user terminal. The user terminal sends the reference signal resources. The base station uses the reference signal resources to estimate a channel feature and feeds back the channel feature to another base station or an entity of the core network. A feedback operation of the base station includes at least one piece of the content below.

For the reference signal resources having the association relationship, only one channel impulse response needs to be fed back.

For the reference signal resources having the association relationship, only one piece of RSRP needs to be fed back.

For the reference signal resources having the association relationship, only one RSRQ needs to be fed back.

For the reference signal resources having the association relationship, only one first path position needs to be fed back.

When the reference signal resources having the association relationship are used for calculating a reference signal time difference, reference signals of the reference signal resources having the association relationship are equivalent to one reference signal. The reference signal time difference refers to a time difference between receiving two different reference signals.

When the reference signal resources having the association relationship are used for calculating an Rx-Tx time difference, reference signals of the reference signal resources having the association relationship are equivalent to one reference signal. The Rx-Tx time difference refers to a time difference between the moment of receiving a reference signal and the moment of sending another reference signal.

For the reference signal resources having the association relationship, only one delay spread needs to be fed back.

For the reference signal resources having the association relationship, only one signal receiving angle needs to be fed back.

For the reference signal resources having the association relationship, only one signal receiving angle spread needs to be fed back.

For the reference signal resources having the association relationship, only one piece of Doppler needs to be fed back.

For the reference signal resources having the association relationship, only one Doppler spread needs to be fed back.

In an implementation, the operation in which the reference signal resource pool is configured corresponding to the frequency domain units includes the operation below.

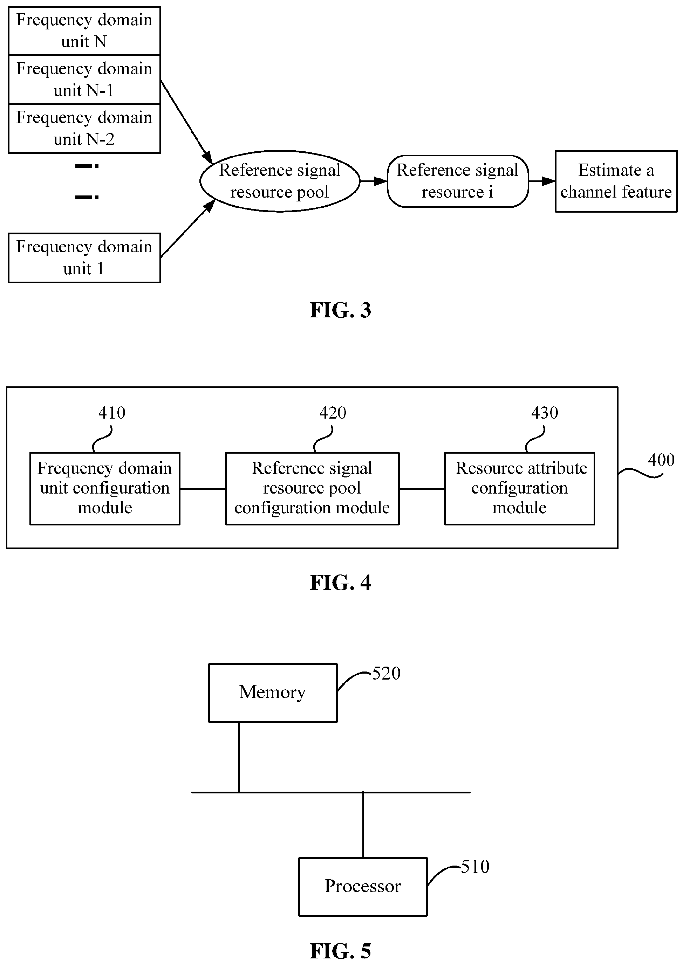

One reference signal resource pool is configured for all the frequency domain units. The reference signal resource pool includes a plurality of reference signal resources. A framework of the frequency domain units and the reference signal resource pool is shown in FIG. 3.

A frequency band resource occupied by each reference signal resource is configured through one of the manners below.

The frequency domain starting position of only one frequency band resource and a corresponding bandwidth size are configured.

The starting position of one frequency band resource and a corresponding bandwidth size are configured for each frequency domain unit having an association relationship.

In the case of configuring the frequency domain starting position of only one frequency band resource and the corresponding bandwidth size, a sequence for transmitting the reference signal resources includes at least one of the features below.

The sequence is a Zadoff-Chu (ZC) sequence. The length of the sequence may be determined according to at least one of a bandwidth size, a subcarrier spacing, or a comb configuration.

The sequence is a maximum-length linear shift register sequence (m sequence). The length of the sequence may be determined according to at least one of a bandwidth size, a subcarrier spacing, or a comb configuration.

It is configured in a frequency domain range included in the frequency band resource that part of the frequency domain resources do not transmit the sequence. Frequency domain units that are in the frequency band resource and transmit signals may be discontinuous. Accordingly, part of the frequency domain units have no signal transmission. Correspondingly, RBs corresponding to this part of the frequency domain units not transmitting signals are vacated.

**In** the case of configuring the starting position of one frequency band resource and the corresponding bandwidth size for each frequency domain unit having the association relationship, sequences for transmitting the reference signal resources includes at least one of the features below.

The sequences are a plurality of ZC sequences. The ZC sequences are in one-to-one correspondence with the frequency domain units having the association relationship. Moreover, each frequency domain unit can be configured with the cyclic shift amount of a sequence independently. The length of each ZC sequence may be determined according to at least one of the bandwidth size, subcarrier spacing or comb configuration configured for a corresponding frequency domain unit.

The sequences are a plurality of m sequences. The m sequences are in one-to-one correspondence with the frequency domain units having the association relationship. Moreover, each frequency domain unit can be configured with the initial seed of a sequence. The length of each m sequence may be determined according to at least one of the bandwidth size, subcarrier spacing or comb configuration configured for a corresponding frequency domain unit.

The frequency offset in one RB in each frequency domain unit is different.

The comb configuration in each frequency domain unit is different.

The subcarrier spacing in each frequency domain unit is different.

For the reference signal resources configured based on the preceding method, the frequency band resources include a plurality of frequency domain units. The reference signal resources are able to be used for jointly estimating at least one of the following channel features: channel impulse response, reference signal receiving power (RSRP), reference signal receiving quality (RSRQ), first path position, reference signal time difference (RSTD), Rx-Tx time difference, delay spread, signal receiving angle, signal receiving angle spread, Doppler, and Doppler spread.

The base station may send the reference signal resources configured in the preceding implementation to the user terminal. The user terminal uses the reference signal resources to estimate a channel feature and feeds back the channel feature to the base station or an entity of the core network.

The base station may send the reference signal resources configured in the preceding implementation to the user terminal. The user terminal sends the reference signal resources. The base station uses the reference signal resources to estimate a channel feature and feeds back the channel feature to another base station or an entity of the core network.

In embodiments of the present application, FIG. 4 is a diagram illustrating the structure of a reference signal resource configuration apparatus. The apparatus includes a frequency domain unit configuration module 410, a reference signal resource pool configuration module 420, and a resource attribute configuration module 430.

The frequency domain unit configuration module 410 is configured to configure a plurality of frequency domain units as a frequency domain unit set. The frequency domain units are frequency domain resources of a preset frequency segment.

The reference signal resource pool configuration module 420 is configured to configure a reference signal resource pool corresponding to the frequency domain units. The reference signal resource pool includes a plurality of reference signal resources. At least part of the reference signal resources have an association relationship established according to a preset rule or have an association relationship established according to an indication of an association relationship among the frequency domain units.

The resource attribute configuration module 430 is configured to configure a preset resource attribute for multiple reference signal resources having an association relationship.

In an implementation, the reference signal resource pool configuration module 420 is specifically configured to perform the operations below.

One reference signal resource pool is configured corresponding to each frequency domain unit. Reference signal resource pools are configured to include a plurality of reference signal resources. Alternatively, a plurality of reference signal resource sets are included. The reference signal resource sets include a plurality of reference signal resources.

An association relationship between multiple reference signal resources belonging to different reference signal resource pools is determined through at least one of the manners below.

The association relationship is established through serial numbers of reference signal sets where the reference signal resources are located.

The association relationship is established through serial numbers of the reference signal resources.

The association relationship is established through the configuration information for determining the power control of the reference signal resources.

The association relationship is established through the configuration information for determining spatial filters of the reference signal resources or spatial relationships of the reference signal resources.

In this implementation, the resource attribute configuration module 430 is configured to perform the operation below.

At least one of the following is configured for the reference signal resources having the association relationship: a preset frequency domain feature, a preset time domain feature, a preset power feature, or a preset spatial feature.

That the preset frequency domain feature is configured for the reference signal resources having the association relationship includes at least one of the manners below.

The starting position in a frequency domain of each reference signal resource is configured independently.

The bandwidth size of each reference signal resource is configured independently.

The comb configuration of each reference signal resource is configured independently.

The frequency offset of each reference signal resource in one resource block (RB) is configured independently.

That the preset time domain feature is configured for the reference signal resources having the association relationship includes at least one of the manners below.

It is configured that time domain behaviors of the reference signal resources having the association relationship are consistent with each other.

It is configured that a sending interval of the reference signal resources having the association relationship in the time domain is within preset time.

Configuring that the time domain behaviors of the reference signal resources having the association relationship are consistent with each other includes at least one of the manners below.

It is configured that the reference signal resources having the association relationship are sent periodically and are sent in a same period.

It is configured that the reference signal resources having the association relationship are sent semi-persistently and are sent in a same period.

It is configured that the reference signal resources having the association relationship are sent aperiodically.

Configuring that the sending interval of the reference signal resources having the association relationship in the time domain is within the preset time includes at least one of the manners below.

It is configured that the reference signal resources having the association relationship are sent in the same slot.

It is configured that a sending interval of the reference signal resources having the association relationship is not greater than a preset time unit.

That the preset power feature is configured for the reference signal resources having the association relationship includes at least one of the manners below.

It is configured that the reference signal resources having the association relationship are associated with a same reference signal for calculating a path loss.

It is configured that for the reference signal resources having the association relationship, each resource element (RE) has the same sending power.

It is configured that the reference signal resources having the association relationship, as for any RE, a power sum of a plurality of symbols in one slot are the same.

It is configured that the reference signal resources having the association relationship perform dynamic power adjustment simultaneously.

That the preset spatial feature is configured for the reference signal resources having the association relationship includes at least one of the manners below.

It is configured that the reference signal resources having the association relationship are sent by using the same spatial filter or the same spatial relationship.

It is configured that the reference signal resources having the association relationship semi-statically or dynamically update the spatial filters or the spatial relationships simultaneously.

**In** an implementation, the reference signal resource pool configuration module 420 is specifically configured to perform the operation below.

One reference signal resource pool is configured for all the frequency domain units. The reference signal resource pool includes a plurality of reference signal resources.

A frequency band resource occupied by each reference signal resource is configured through one of the manners below.

The frequency domain starting position of only one frequency band resource and a corresponding bandwidth size are configured.

The starting position of one frequency band resource and a corresponding bandwidth size are configured for each frequency domain unit having an association relationship.

**In** the case of configuring only the frequency domain starting position of one frequency band resource and the corresponding bandwidth size, a sequence for transmitting the reference signal resources includes at least one of the features below.

The sequence is a Zadoff-Chu (ZC) sequence. The length of the sequence is determined according to at least one of a bandwidth size, a subcarrier spacing, or a comb configuration.

The sequence is a maximum-length linear shift register sequence (m sequence). The length of the sequence is determined according to at least one of a bandwidth size, a subcarrier spacing, or a comb configuration.

**In** the case of configuring the starting position of one frequency band resource and the corresponding bandwidth size for each frequency domain unit having the association relationship, sequences for transmitting the reference signal resources includes at least one of the features below.

The sequences are a plurality of ZC sequences. The ZC sequences are in one-to-one correspondence with the frequency domain units having the association relationship. Moreover, each frequency domain unit can be configured with the cyclic shift amount of a sequence independently. The length of each ZC sequence may be determined according to at least one of the bandwidth size, subcarrier spacing or comb configuration configured for a corresponding frequency domain unit.

The sequences are a plurality of m sequences. The m sequences are in one-to-one correspondence with the frequency domain units having the association relationship. Moreover, each frequency domain unit can be configured with the initial seed of a sequence. The length of each m sequence may be determined according to at least one of the bandwidth size, subcarrier spacing or comb configuration configured for a corresponding frequency domain unit.

The frequency offset in one RB in each frequency domain unit is different.

The comb configuration in each frequency domain unit is different.

The subcarrier spacing in each frequency domain unit is different.

FIG. 5 is a diagram illustrating the structure of a device according to embodiments of the present application. As shown in FIG. 5, the device provided in the present application includes a processor 510 and a memory 520. One or more processors 510 may be included in the device. One processor 510 is taken as an example in FIG. 5. One or more memories 520 may be included in the device. One memory 520 is taken as an example in FIG. 5. The processor 510 and memory 520 of the device are connected by a bus or in other manners. The connection by a bus is taken as an example in FIG. 5.

As a computer-readable storage medium, the memory 520 may be configured to store software programs, computer-executable programs, and modules, such as program instructions/modules (for example, the frequency domain unit configuration module, reference signal resource pool configuration module and resource attribute configuration module in the reference signal resource configuration apparatus) corresponding to the device according to any embodiment of the present application. The memory 520 may include a program storage region and a data storage region, where the program storage region may store an operating system and an application program required by at least one function, and the data storage region may store data created depending on the use of the device. Additionally, the memory 520 may include a high-speed random-access memory and may also include a nonvolatile memory, such as at least one disk memory, a flash memory, or another nonvolatile solid-state memory. In some examples, the memory 520 may further include memories located remotely relative to the processor 510, and these remote memories may be connected to the equipment via a network. Examples of the preceding network include, but are not limited to, the Internet, an intranet, a local area network, a mobile communication network, and a combination thereof.

The device provided above may be configured to perform the reference signal resource configuration method provided in any preceding embodiment and has corresponding functions and effects.

Embodiments of the present application further provide a storage medium including computer-executable instructions. When executed by a computer processor, the computer-executable instructions are used for performing the reference signal resource configuration method. The method includes that a plurality of frequency domain units are configured as a frequency domain unit set, where the frequency domain units are frequency domain resources of a preset frequency segment; that a reference signal resource pool is configured corresponding to the frequency domain units, where the reference signal resource pool includes a plurality of reference signal resources, and at least part of the reference signal resources have an association relationship established according to a preset rule or have an association relationship established according to an indication of an association relationship among the frequency domain units; and that a preset resource attribute is configured for multiple reference signal resources having an association relationship.

The preceding are only exemplary embodiments of the present application and are not intended to limit the scope of the present application.

It is to be understood by those skilled in the art that the term user terminal covers any suitable type of wireless user devices, for example, a mobile phone, a portable data processing apparatus, a portable web browser, or a vehicle-mounted mobile station.

In general, multiple embodiments of the present application may be implemented in hardware or special-purpose circuits, software, logic, or any combination thereof. For example, some aspects may be implemented in hardware while other aspects may be implemented in firmware or software that may be executed by a controller, a microprocessor, or another computing apparatus, though the present application is not limited thereto.

Embodiments of the present application may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions or may represent a combination of program steps with logic circuits, modules, and functions. A computer program may be stored in a memory. The memory may be of any type suitable for the local technical environment and may be implemented using any suitable data storage technology, such as, but not limited to, a read-only memory (ROM), a random-access memory (RAM) and an optical memory device and system (a digital versatile disc (DVD), or a compact disc (CD)). Computer-readable media may include non-transitory storage media. Data processors may be of any type suitable for the local technical environment and may be, for example, but not limited to, a general-purpose computer, a special-purpose computer, a microprocessor, a digital signal processor (DSP), an application-specific integrated circuit (ASIC), a field programmable gate array (FPGA), and a processor based on multi-core processor architecture.

## Claims

1. A reference signal resource configuration method, comprising:
configuring (S110) a plurality of frequency domain units as a frequency domain unit set, wherein the plurality of frequency domain units are frequency domain resources of a preset frequency band, and the plurality of frequency domain units in the frequency domain unit set are continuous or discontinuous in a frequency domain;
configuring (S120) a reference signal resource pool corresponding to the plurality of frequency domain units, wherein the reference signal resource pool corresponding to the plurality of frequency domain units comprises a plurality of reference signal resources; and
configuring (S130) a preset resource attribute for the at least part of the plurality of reference signal resources having an association relationship,
wherein configuring (S120) the reference signal resource pool corresponding to the plurality of frequency domain units comprises:
configuring a reference signal resource pool corresponding to each frequency domain unit among the plurality of frequency domain units, wherein the reference signal resource pool corresponding to each frequency domain unit is configured to comprise a plurality of reference signal resources; or comprising a plurality of reference signal resource sets, wherein the plurality of reference signal resource sets comprises the plurality of reference signal resources; and
determining, through at least one of the following manners, an association relationship between multiple reference signal resources belonging to different reference signal resource pools, wherein the multiple reference signal resources are among the plurality of reference signal resources:
establishing the association relationship through serial numbers of reference signal sets where the multiple reference signal resources are located;
establishing the association relationship through serial numbers of the multiple reference signal resources;
establishing the association relationship through configuration information for determining power control of the multiple reference signal resources; or
establishing the association relationship through configuration information for determining spatial filters of the multiple reference signal resources or spatial relationships of the multiple reference signal resources,
wherein the multiple reference signal resources having the association relationship are configured to jointly estimate at least one of the following channel features:
a channel impulse response, reference signal receiving power, a reference signal receiving quality, a first path position, a reference signal time difference, an Rx-Tx time difference, a delay spread, a signal receiving angle, a signal receiving angle spread, Doppler, and a Doppler spread.

2. The method according to claim 1, wherein configuring (S130) the preset resource attribute for the multiple reference signal resources having the association relationship comprises:
configuring at least one of the following for the multiple reference signal resources having the association relationship: a preset frequency domain feature, a preset time domain feature, a preset power feature, or a preset spatial feature.

3. The method according to claim 2, wherein configuring the preset frequency domain feature for the multiple reference signal resources having the association relationship is performed in at least one of the following manners:
configuring a starting position in a frequency domain of each reference signal resource among the multiple reference signal resources independently;
configuring a bandwidth size of each reference signal resource independently;
configuring a comb configuration of each reference signal resource independently; or
configuring a frequency offset of each reference signal resource in one resource block, RB, independently.

4. The method according to claim 2, wherein configuring the preset time domain feature for the multiple reference signal resources having the association relationship is performed in at least one of the following manners:
configuring that time domain behaviors of the multiple reference signal resources having the association relationship are consistent with each other; or
configuring that a sending interval between a first sent reference signal resource and a last sent reference signal resource in a time domain is within a preset time period, wherein the first sent reference signal resource and the last sent reference signal resource are among the multiple reference signal resources having the association relationship.

5. The method according to claim 4, wherein configuring that the time domain behaviors of the multiple reference signal resources having the association relationship are consistent with each other is performed in at least one of the following manners:
configuring that the multiple reference signal resources having the association relationship are sent periodically and are sent in a same period;
configuring that the multiple reference signal resources having the association relationship are sent semi-persistently and are sent in a same period; or
configuring that the multiple reference signal resources having the association relationship are sent aperiodically.

6. The method according to claim 4, wherein configuring that the sending interval between the multiple reference signal resources having the association relationship in a time domain is within a preset time unit is performed in at least one of the following manners:
configuring that the multiple reference signal resources having the association relationship are sent in a same slot; or
configuring that a sending interval between a first sent reference signal resource and a last sent reference signal resource in a time domain is not greater than a preset time unit, wherein the first sent reference signal resource and the last sent reference signal resource are among the multiple reference signal resources having the association relationship.

7. The method according to claim 2, wherein configuring the preset power feature for the multiple reference signal resources having the association relationship is performed in at least one of the following manners:
configuring that the multiple reference signal resources having the association relationship are associated with a same reference signal for calculating a path loss;
configuring that for the multiple reference signal resources having the association relationship, each resource element, RE, has same sending power;
configuring that for the multiple reference signal resources having the association relationship, as for a RE, a power sum of a plurality of symbols in one slot are the same; or
configuring that the multiple reference signal resources having the association relationship perform dynamic power adjustment simultaneously.

8. The method according to claim 2, wherein configuring the preset spatial feature for the multiple reference signal resources having the association relationship is performed in at least one of the following manners:
configuring that the multiple reference signal resources having the association relationship are sent by using a same spatial filter or a same spatial relationship; or
configuring that the multiple reference signal resources having the association relationship semi-statically or dynamically update spatial filters or spatial relationships simultaneously.

9. The method according to claim 1, wherein configuring (S120) the reference signal resource pool corresponding to the plurality of frequency domain units comprises:
configuring the reference signal resource pool for all the plurality of frequency domain units, wherein the reference signal resource pool comprises a plurality of reference signal resources; and
configuring a frequency band resource occupied by each reference signal resource among the plurality of reference signal resources through one of the following manners:
configuring a frequency domain starting position of and a corresponding bandwidth size of only one frequency band resource; or
configuring a respective starting position of and a respective corresponding bandwidth size of a frequency band resource for each frequency domain unit of the at least part of the plurality of frequency domain units having an association relationship,
wherein in a case of configuring the frequency domain starting position of and the corresponding bandwidth size of the only one frequency band resource, a sequence for transmitting the plurality of reference signal resources comprises at least one of the following features:
the sequence is a ZC sequence;
the sequence is an m sequence; or
it is configured in a frequency domain range comprised in the only one frequency band resource that part of the frequency domain resources do not used for transmitting the sequence.

10. The method according to claim 9, wherein in a case of configuring the respective starting position of and the respective corresponding bandwidth size for each frequency domain unit of the at least part of the plurality of frequency domain units having an association relationship, sequences for transmitting the plurality of reference signal resources comprises at least one of the following features:
the sequences are a plurality of ZC sequences, wherein the plurality of ZC sequences are in one-to-one correspondence with the plurality of frequency domain units having the association relationship;
the sequences are a plurality of m sequences, wherein the plurality of m sequences are in one-to-one correspondence with the plurality of frequency domain units having the association relationship;
a frequency offset in one RB in each frequency domain unit is different;
a comb configuration in each frequency domain unit is different; or
a subcarrier spacing in each frequency domain unit is different.

11. A device, comprising a memory (520) and at least one processor (510), wherein:
the memory (520) is configured to store at least one program; and
the at least one program, when executed by the at least one processor (510), causes the at least one processor (510) to perform the method according to any one of claims 1 to 10.

12. A storage medium storing a computer program, wherein when the computer program is executed by a processor, the method according to any one of claims 1 to 10 is performed.

## Patentansprüche

1. Verfahren zur Konfiguration von Referenzsignalressourcen, umfassend:
Konfigurieren (S110) einer Mehrzahl von Frequenzbereichseinheiten als einen Frequenzbereichseinheitensatz, wobei die Mehrzahl von Frequenzbereichseinheiten Frequenzbereichsressourcen eines voreingestellten Frequenzbands sind und die Mehrzahl von Frequenzbereichseinheiten in dem Frequenzbereichseinheitensatz im Frequenzbereich zusammenhängend oder nicht zusammenhängend sind;
Konfigurieren (S120) eines der Mehrzahl von Frequenzbereichseinheiten entsprechenden Referenzsignalressourcenpools, wobei der der Mehrzahl von Frequenzbereichseinheiten entsprechende Referenzsignalressourcenpool eine Mehrzahl von Referenzsignalressourcen umfasst; und
Konfigurieren (S130) eines voreingestellten Ressourcenattributs für den zumindest einen Teil der Mehrzahl von Referenzsignalressourcen, die eine Zuordnungsbeziehung aufweisen,
wobei das Konfigurieren (S120) des der Mehrzahl von Frequenzbereichseinheiten entsprechenden Referenzsignalressourcenpools umfasst:
Konfigurieren eines Referenzsignalressourcenpools, der jeder Frequenzbereichseinheit unter der Mehrzahl von Frequenzbereichseinheiten entspricht, wobei der jeder Frequenzbereichseinheit entsprechende Referenzsignalressourcenpool so konfiguriert ist, dass er eine Mehrzahl von Referenzsignalressourcen umfasst;
oder eine Mehrzahl von Referenzsignalressourcensätzen umfasst, wobei die Mehrzahl von Referenzsignalressourcensätzen die Mehrzahl von Referenzsignalressourcen umfasst; und
Bestimmen, durch mindestens eine der folgenden Vorgehensweisen, einer Zuordnungsbeziehung zwischen mehreren Referenzsignalressourcen, die zu unterschiedlichen Referenzsignalressourcenpools gehören, wobei die mehreren Referenzsignalressourcen zu der Mehrzahl von Referenzsignalressourcen gehören:
Herstellen der Zuordnungsbeziehung anhand von Seriennummern der Referenzsignalsätze, in denen sich die mehreren Referenzsignalressourcen befinden;
Herstellen der Zuordnungsbeziehung anhand von Seriennummern der mehreren Referenzsignalressourcen;
Herstellen der Zuordnungsbeziehung anhand von Konfigurationsinformationen zur Bestimmung der Leistungssteuerung der mehreren Referenzsignalressourcen; oder
Herstellen der Zuordnungsbeziehung anhand von Konfigurationsinformationen zur Bestimmung räumlicher Filter der mehreren Referenzsignalressourcen oder räumlicher Beziehungen der mehreren Referenzsignalressourcen,
wobei die mehreren Referenzsignalressourcen, die die Zuordnungsbeziehung aufweisen, dazu konfiguriert sind, gemeinsam mindestens eine der folgenden Kanaleigenschaften zu schätzen:
eine Kanalimpulsantwort, eine Referenzsignalempfangsleistung, eine Referenzsignalempfangsqualität, eine Position des ersten Pfads, eine Referenzsignalzeitdifferenz, eine Rx-Tx-Zeitdifferenz, eine Verzögerungsspreizung, einen Signalempfangswinkel, eine Signalempfangswinkelspreizung, einen Doppler-Effekt und eine Doppler-Spreizung.

2. Verfahren nach Anspruch 1, wobei das Konfigurieren (S130) des voreingestellten Ressourcenattributs für die mehreren Referenzsignalressourcen, die die Zuordnungsbeziehung aufweisen, umfasst:
Konfigurieren mindestens einer der folgenden Eigenschaften für die mehreren Referenzsignalressourcen, die die Zuordnungsbeziehung aufweisen: einer voreingestellten Frequenzbereichseigenschaft, einer voreingestellten Zeitbereichseigenschaft, einer voreingestellten Leistungseigenschaft oder einer voreingestellten räumlichen Eigenschaft.

3. Verfahren nach Anspruch 2, wobei das Konfigurieren der voreingestellten Frequenzbereichseigenschaft für die mehreren Referenzsignalressourcen, die die Zuordnungsbeziehung aufweisen, auf mindestens eine der folgenden Vorgehensweisen erfolgt:
unabhängiges Konfigurieren einer Startposition im Frequenzbereich jeder Referenzsignalressource unter den mehreren Referenzsignalressourcen;
unabhängiges Konfigurieren einer Bandbreitengröße jeder Referenzsignalressource;
unabhängiges Konfigurieren einer Kammkonfiguration jeder Referenzsignalressource; oder
unabhängiges Konfigurieren eines Frequenzversatzes jeder Referenzsignalressource in einem Ressourcenblock, RB.

4. Verfahren nach Anspruch 2, wobei das Konfigurieren der voreingestellten Zeitbereichseigenschaft für die mehreren Referenzsignalressourcen, die die Zuordnungsbeziehung aufweisen, auf mindestens eine der folgenden Vorgehensweisen erfolgt:
Konfigurieren, dass Zeitbereichsverhalten der mehreren Referenzsignalressourcen, die die Zuordnungsbeziehung aufweisen, miteinander übereinstimmen; oder
Konfigurieren, dass ein Sendeintervall zwischen einer zuerst gesendeten Referenzsignalressource und einer zuletzt gesendeten Referenzsignalressource in einem Zeitbereich innerhalb einer voreingestellten Zeitspanne liegt, wobei die zuerst gesendete Referenzsignalressource und die zuletzt gesendete Referenzsignalressource zu den mehreren Referenzsignalressourcen gehören, die die Zuordnungsbeziehung aufweisen.

5. Verfahren nach Anspruch 4, wobei das Konfigurieren, dass die Zeitbereichsverhalten der mehreren Referenzsignalressourcen, die die Zuordnungsbeziehung aufweisen, miteinander übereinstimmen, auf mindestens eine der folgenden Vorgehensweisen erfolgt:
Konfigurieren, dass die mehreren Referenzsignalressourcen, die die Zuordnungsbeziehung aufweisen, periodisch und in derselben Periode gesendet werden;
Konfigurieren, dass die mehreren Referenzsignalressourcen, die die Zuordnungsbeziehung aufweisen, semipersistent und in derselben Periode gesendet werden; oder
Konfigurieren, dass die mehreren Referenzsignalressourcen, die die Zuordnungsbeziehung aufweisen, aperiodisch gesendet werden.

6. Verfahren nach Anspruch 4, wobei das Konfigurieren, dass das Sendeintervall zwischen den mehreren Referenzsignalressourcen, die die Zuordnungsbeziehung aufweisen, in einem Zeitbereich innerhalb einer voreingestellten Zeiteinheit liegt, auf mindestens eine der folgenden Vorgehensweisen erfolgt:
Konfigurieren, dass die mehreren Referenzsignalressourcen, die die Zuordnungsbeziehung aufweisen, in demselben Slot gesendet werden; oder
Konfigurieren, dass ein Sendeintervall zwischen einer zuerst gesendeten Referenzsignalressource und einer zuletzt gesendeten Referenzsignalressource in einem Zeitbereich nicht größer als eine voreingestellte Zeiteinheit ist, wobei die zuerst gesendete Referenzsignalressource und die zuletzt gesendete Referenzsignalressource zu den mehreren Referenzsignalressourcen gehören, die die Zuordnungsbeziehung aufweisen.

7. Verfahren nach Anspruch 2, wobei das Konfigurieren der voreingestellten Leistungseigenschaft für die mehreren Referenzsignalressourcen, die die Zuordnungsbeziehung aufweisen, auf mindestens eine der folgenden Vorgehensweisen erfolgt:
Konfigurieren, dass die mehreren Referenzsignalressourcen, die die Zuordnungsbeziehung aufweisen, demselben Referenzsignal zur Berechnung eines Pfadverlusts zugeordnet sind;
Konfigurieren, dass bei den mehreren Referenzsignalressourcen, die die Zuordnungsbeziehung aufweisen, jedes Ressourcenelement, RE, dieselbe Sendeleistung aufweist;
Konfigurieren, dass bei den mehreren Referenzsignalressourcen, die die Zuordnungsbeziehung aufweisen, für ein RE die Leistungssummen einer Mehrzahl von Symbolen in einem Slot gleich sind; oder
Konfigurieren, dass die mehreren Referenzsignalressourcen, die die Zuordnungsbeziehung aufweisen, gleichzeitig eine dynamische Leistungsanpassung durchführen.

8. Verfahren nach Anspruch 2, wobei das Konfigurieren der voreingestellten räumlichen Eigenschaft für die mehreren Referenzsignalressourcen, die die Zuordnungsbeziehung aufweisen, auf mindestens eine der folgenden Vorgehensweisen erfolgt:
Konfigurieren, dass die mehreren Referenzsignalressourcen, die die Zuordnungsbeziehung aufweisen, unter Verwendung desselben räumlichen Filters oder derselben räumlichen Beziehung gesendet werden; oder
Konfigurieren, dass die mehreren Referenzsignalressourcen, die die Zuordnungsbeziehung aufweisen, räumliche Filter oder räumliche Beziehungen gleichzeitig semistatisch oder dynamisch aktualisieren.

9. Verfahren nach Anspruch 1, wobei das Konfigurieren (S120) des der Mehrzahl von Frequenzbereichseinheiten entsprechenden Referenzsignalressourcenpools umfasst:
Konfigurieren des Referenzsignalressourcenpools für alle Frequenzbereichseinheiten der Mehrzahl von Frequenzbereichseinheiten, wobei der Referenzsignalressourcenpool eine Mehrzahl von Referenzsignalressourcen umfasst; und
Konfigurieren einer Frequenzbandressource, die von jeder Referenzsignalressource unter der Mehrzahl von Referenzsignalressourcen belegt wird, durch eine der folgenden Vorgehensweisen:
Konfigurieren einer Frequenzbereichsstartposition und einer entsprechenden Bandbreitengröße nur einer Frequenzbandressource; oder
Konfigurieren einer jeweiligen Startposition und einer jeweiligen entsprechenden Bandbreitengröße einer Frequenzbandressource für jede Frequenzbereichseinheit des zumindest einen Teils der Mehrzahl von Frequenzbereichseinheiten, die eine Zuordnungsbeziehung aufweisen,
wobei im Fall des Konfigurierens der Frequenzbereichsstartposition und der entsprechenden Bandbreitengröße der nur einen Frequenzbandressource eine Sequenz zum Übertragen der Mehrzahl von Referenzsignalressourcen mindestens eine der folgenden Eigenschaften aufweist:
die Sequenz ist eine ZC-Sequenz;
die Sequenz ist eine m-Sequenz; oder
es ist in einem Frequenzbereich konfiguriert, der in der nur einen Frequenzbandressource enthalten ist, dass ein Teil der Frequenzbereichsressourcen nicht zum Übertragen der Sequenz verwendet wird.

10. Verfahren nach Anspruch 9, wobei im Fall des Konfigurierens der jeweiligen Startposition und der jeweiligen entsprechenden Bandbreitengröße für jede Frequenzbereichseinheit des zumindest einen Teils der Mehrzahl von Frequenzbereichseinheiten, die eine Zuordnungsbeziehung aufweisen, Sequenzen zum Übertragen der Mehrzahl von Referenzsignalressourcen mindestens eine der folgenden Eigenschaften aufweisen:
die Sequenzen sind eine Mehrzahl von ZC-Sequenzen, wobei die Mehrzahl von ZC-Sequenzen den Frequenzbereichseinheiten der Mehrzahl von Frequenzbereichseinheiten, die die Zuordnungsbeziehung aufweisen, eins zu eins entsprechen;
die Sequenzen sind eine Mehrzahl von m-Sequenzen, wobei die Mehrzahl von m-Sequenzen den Frequenzbereichseinheiten der Mehrzahl von Frequenzbereichseinheiten, die die Zuordnungsbeziehung aufweisen, eins zu eins entsprechen;
ein Frequenzversatz in einem RB ist in jeder Frequenzbereichseinheit unterschiedlich;
eine Kammkonfiguration ist in jeder Frequenzbereichseinheit unterschiedlich; oder
ein Unterträgerabstand ist in jeder Frequenzbereichseinheit unterschiedlich.

11. Vorrichtung, umfassend einen Speicher (520) und mindestens einen Prozessor (510), wobei:
der Speicher (520) dazu konfiguriert ist, mindestens ein Programm zu speichern; und
das mindestens eine Programm, wenn es von dem mindestens einen Prozessor (510) ausgeführt wird, den mindestens einen Prozessor (510) veranlasst, das Verfahren nach einem der Ansprüche 1 bis 10 durchzuführen.

12. Speichermedium, auf dem ein Computerprogramm gespeichert ist, wobei das Verfahren nach einem der Ansprüche 1 bis 10 durchgeführt wird, wenn das Computerprogramm von einem Prozessor ausgeführt wird.

## Revendications

1. Procédé de configuration de ressource de signal de référence, comprenant:
la configuration (S110) d'une pluralité d'unités du domaine fréquentiel sous la forme d'un ensemble d'unités du domaine fréquentiel, la pluralité d'unités du domaine fréquentiel constituant des ressources fréquentielles d'une bande de fréquences prédéfinie, et les unités du domaine fréquentiel de l'ensemble d'unités du domaine fréquentiel étant contiguës ou non contiguës dans le domaine fréquentiel;
la configuration (S120) d'un ensemble de ressources de signaux de référence correspondant à la pluralité d'unités du domaine fréquentiel, l'ensemble de ressources de signaux de référence correspondant à la pluralité d'unités du domaine fréquentiel comprenant une pluralité de ressources de signaux de référence; et
la configuration (S130) d'un attribut de ressource prédéfini pour au moins une partie de la pluralité de ressources de signaux de référence présentant une relation d'association,
dans lequel la configuration (S120) de l'ensemble de ressources de signaux de référence correspondant à la pluralité d'unités du domaine fréquentiel comprend les étapes consistant à:
la configuration d'un ensemble de ressources de signaux de référence correspondant à chaque unité du domaine fréquentiel parmi la pluralité d'unités du domaine fréquentiel, l'ensemble de ressources de signaux de référence correspondant à chaque unité du domaine fréquentiel étant configuré pour comprendre une pluralité de ressources de signaux de référence;
ou comprendre une pluralité d'ensembles de ressources de signaux de référence, la pluralité d'ensembles de ressources de signaux de référence comprenant la pluralité de ressources de signaux de référence; et
la détermination, selon au moins l'un des procédés suivants, d'une relation d'association entre plusieurs ressources de signaux de référence appartenant à différents ensembles de ressources de signaux de référence, lesdites ressources de signaux de référence faisant partie de la pluralité de ressources de signaux de référence:
l'établissement de la relation d'association au moyen des numéros de série des ensembles de signaux de référence auxquels appartiennent lesdites ressources de signaux de référence;
l'établissement de la relation d'association au moyen des numéros de série desdites ressources de signaux de référence;
l'établissement de la relation d'association au moyen d'informations de configuration permettant de déterminer la commande de puissance desdites ressources de signaux de référence; ou
l'établissement de la relation d'association au moyen d'informations de configuration permettant de déterminer les filtres spatiaux desdites ressources de signaux de référence ou les relations spatiales entre celles-ci,
dans lequel lesdites ressources de signaux de référence présentant la relation d'association étant configurées pour estimer conjointement au moins l'une des caractéristiques de canal suivantes:
une réponse impulsionnelle de canal, une puissance reçue du signal de référence, une qualité reçue du signal de référence, une position du premier trajet, une différence temporelle entre signaux de référence, une différence temporelle Rx-Tx, un étalement des retards, un angle de réception du signal, un étalement angulaire de réception du signal, un décalage Doppler et un étalement Doppler.

2. Procédé selon la revendication 1, dans lequel la configuration (S130) de l'attribut de ressource prédéfini pour les ressources de signaux de référence présentant la relation d'association comprend:
la configuration d'au moins l'un des éléments suivants pour lesdites ressources de signaux de référence: une caractéristique fréquentielle prédéfinie, une caractéristique temporelle prédéfinie, une caractéristique de puissance prédéfinie ou une caractéristique spatiale prédéfinie.

3. Procédé selon la revendication 2, dans lequel la configuration de la caractéristique fréquentielle prédéfinie pour les ressources de signaux de référence présentant la relation d'association est effectuée selon au moins l'une des modalités suivantes:
la configuration indépendante d'une position de départ, dans le domaine fréquentiel, de chaque ressource de signal de référence parmi lesdites ressources de signaux de référence;
la configuration indépendante d'une largeur de bande pour chaque ressource de signal de référence;
la configuration indépendante d'une configuration en peigne pour chaque ressource de signal de référence; ou
la configuration indépendante d'un décalage fréquentiel pour chaque ressource de signal de référence dans un bloc de ressources, RB.

4. Procédé selon la revendication 2, dans lequel la configuration de la caractéristique prédéfinie du domaine temporel pour lesdites ressources de signal de référence présentant la relation d'association est effectuée d'au moins l'une des manières suivantes:
la configuration des comportements dans le domaine temporel desdites ressources de signal de référence présentant la relation d'association de façon qu'ils soient identiques; ou
la configuration d'un intervalle d'émission entre une première ressource de signal de référence émise et une dernière ressource de signal de référence émise dans le domaine temporel de façon qu'il soit compris dans une période de temps prédéfinie, dans lequel la première ressource de signal de référence émise et la dernière ressource de signal de référence émise font partie desdites ressources de signal de référence présentant la relation d'association.

5. Procédé selon la revendication 4, dans lequel la configuration des comportements dans le domaine temporel desdites ressources de signal de référence présentant la relation d'association de façon qu'ils soient identiques est effectuée d'au moins l'une des manières suivantes:
la configuration desdites ressources de signal de référence présentant la relation d'association de façon qu'elles soient émises périodiquement et avec la même période;
la configuration desdites ressources de signal de référence présentant la relation d'association de façon qu'elles soient émises de manière semi-persistante et avec la même période; ou
la configuration desdites ressources de signal de référence présentant la relation d'association de façon qu'elles soient émises de manière apériodique.

6. Procédé selon la revendication 4, dans lequel la configuration de l'intervalle d'émission entre lesdites ressources de signal de référence présentant la relation d'association dans le domaine temporel de façon qu'il soit compris dans une unité de temps prédéfinie est effectuée d'au moins l'une des manières suivantes:
la configuration desdites ressources de signal de référence présentant la relation d'association de façon qu'elles soient émises dans le même créneau; ou
la configuration d'un intervalle d'émission entre une première ressource de signal de référence émise et une dernière ressource de signal de référence émise dans le domaine temporel de façon qu'il ne soit pas supérieur à une unité de temps prédéfinie, dans lequel la première ressource de signal de référence émise et la dernière ressource de signal de référence émise font partie desdites ressources de signal de référence présentant la relation d'association.

7. Procédé selon la revendication 2, dans lequel la configuration de la caractéristique de puissance prédéfinie pour lesdites ressources de signal de référence présentant la relation d'association est effectuée d'au moins l'une des manières suivantes:
la configuration desdites ressources de signal de référence présentant la relation d'association de façon qu'elles soient associées à un même signal de référence pour calculer une perte de trajet;
la configuration, pour lesdites ressources de signal de référence présentant la relation d'association, d'une même puissance d'émission pour chaque élément de ressource, RE;
la configuration, pour lesdites ressources de signal de référence présentant la relation d'association, de façon que, pour un RE, la somme des puissances d'une pluralité de symboles dans un créneau soit la même; ou la configuration desdites ressources de signal de référence présentant la relation d'association de façon qu'elles effectuent simultanément un ajustement dynamique de puissance.

8. Procédé selon la revendication 2, dans lequel la configuration de la caractéristique spatiale prédéfinie pour lesdites ressources de signal de référence présentant la relation d'association est effectuée d'au moins l'une des manières suivantes:
la configuration desdites ressources de signal de référence présentant la relation d'association de façon qu'elles soient émises au moyen d'un même filtre spatial ou d'une même relation spatiale; ou
la configuration desdites ressources de signal de référence présentant la relation d'association de façon qu'elles mettent simultanément à jour, de manière semi-statique ou dynamique, des filtres spatiaux ou des relations spatiales.

9. Procédé selon la revendication 1, dans lequel la configuration (S120) du pool de ressources de signal de référence correspondant à la pluralité d'unités du domaine fréquentiel comprend:
la configuration du pool de ressources de signal de référence pour l'ensemble de la pluralité d'unités du domaine fréquentiel, dans lequel le pool de ressources de signal de référence comprend une pluralité de ressources de signal de référence; et
la configuration d'une ressource de bande de fréquences occupée par chaque ressource de signal de référence parmi la pluralité de ressources de signal de référence de l'une des manières suivantes:
la configuration d'une position de départ dans le domaine fréquentiel et d'une largeur de bande correspondante pour une seule ressource de bande de fréquences; ou
la configuration d'une position de départ respective et d'une largeur de bande correspondante respective d'une ressource de bande de fréquences pour chaque unité du domaine fréquentiel parmi au moins une partie de la pluralité d'unités du domaine fréquentiel présentant une relation d'association,
dans lequel, dans le cas de la configuration de la position de départ dans le domaine fréquentiel et de la largeur de bande correspondante de la seule ressource de bande de fréquences, une séquence destinée à transmettre la pluralité de ressources de signal de référence présente au moins l'une des caractéristiques suivantes:
la séquence est une séquence ZC;
la séquence est une séquence m; ou
il est prévu que, dans une plage du domaine fréquentiel comprise dans la seule ressource de bande de fréquences,
une partie des ressources du domaine fréquentiel ne soit pas utilisée pour transmettre la séquence.

10. Procédé selon la revendication 9, dans lequel, dans le cas de la configuration de la position de départ respective et de la largeur de bande correspondante respective pour chaque unité du domaine fréquentiel parmi au moins une partie de la pluralité d'unités du domaine fréquentiel présentant une relation d'association, des séquences destinées à transmettre la pluralité de ressources de signal de référence présentent au moins l'une des caractéristiques suivantes:
les séquences sont une pluralité de séquences ZC, dans lequel la pluralité de séquences ZC sont en correspondance biunivoque avec la pluralité d'unités du domaine fréquentiel présentant la relation d'association;
les séquences sont une pluralité de séquences m, dans lequel la pluralité de séquences m sont en correspondance biunivoque avec la pluralité d'unités du domaine fréquentiel présentant la relation d'association;
un décalage fréquentiel dans un RB est différent dans chaque unité du domaine fréquentiel;
une configuration en peigne est différente dans chaque unité du domaine fréquentiel; ou
un espacement entre sous-porteuses est différent dans chaque unité du domaine fréquentiel.

11. Dispositif comprenant une mémoire (520) et au moins un processeur (510), dans lequel:
la mémoire (520) est configurée pour stocker au moins un programme; et
au moins un programme, lorsqu'il est exécuté par le au moins un processeur (510), amène le au moins un processeur (510) à mettre en œuvre le procédé selon l'une quelconque des revendications 1 à 10.

12. Support de stockage stockant un programme informatique, dans lequel, lorsque le programme informatique est exécuté par un processeur, le procédé selon l'une quelconque des revendications 1 à 10 est mis en œuvre.
